# EUROPEAN PATENT SPECIFICATION

(11) **EP 2 554 236 B1**
(45) Date of publication and mention of the grant of the patent: **08.07.2020**
(21) Application number: 11765672.8
(22) Date of filing: 30.03.2011
(51) Int. Cl.: B01D 39/20, B01D 46/00, B01D 53/94, B01J 23/656, B01J 35/04, F01N 3/02, B01D 46/24, B01J 23/63, B01J 37/02, C04B 38/00, F01N 3/022, C04B 111/00, B01J 35/02

(54) **HONEYCOMB FILTER**
WABENSTRUKTURFILTER
FILTRE EN NID D'ABEILLES

(30) Priority: 31.03.2010 JP 2010081898
(43) Date of publication of application: 06.02.2013
(73) Proprietor: NGK Insulators, Ltd., Nagoya-City, Aichi-ken 467-8530 (JP)
(72) Inventor: SHINSHI, Mariko, Nagoya-city Aichi 467-8530 (JP); MIZUTANI, Takashi, Nagoya-city Aichi 467-8530 (JP)
(74) Representative: Mewburn Ellis LLP
(86) International application number: PCT/JP2011/058082
(87) International publication number: WO 2011/125772

(56) References cited:
- EP-A1- 2 415 509
- WO-A1-2007/049338
- WO-A1-2008/143028
- JP-A- 2002 301 325
- JP-A- 2003 010 616
- JP-A- 2003 254 034
- JP-A- 2003 275 521
- JP-A- 2004 169 586
- JP-A- 2005 002 972
- JP-A- 2006 110 413

## Description

### Technical Field

The present invention relates to a honeycomb filter.

### Background Art

One proposed honeycomb filter includes a porous partition portion, in which a cell that is open at one end and closed at the other end and a cell that is closed at one end and open at the other end are alternately disposed, and a layer for trapping and removing particulate matter (PM) contained in an exhaust gas formed on the partition portion (see, for example, Patent Documents 1 to 3). This honeycomb filter can trap PM using the trapping layer with low pressure loss.

Patent Document 1: JP 2004-216226 A
Patent Document 2: JP 6-33734 A
Patent Document 3: JP 1-304022 A

Another honeycomb filter comprising honeycomb segments is disclosed in JP2003254034.

### Disclosure of Invention

In such a honeycomb filter, "regeneration treatment" in which trapped PM may be burnt to restore the function of the filter may be performed. According to Patent Documents 1 to 3, although a trapping layer disposed on each of partition portions could decrease pressure loss, a thermal expansion difference sometimes occurred between a plurality of honeycomb segments constituting a honeycomb filter and a bonding member for joining the honeycomb segments in regeneration treatment.

In view of the situations described above, it is a principal object of the present invention to provide a honeycomb filter that has a decreased thermal expansion difference between a honeycomb segment and a bonding member in regeneration treatment.

In order to achieve the principal object, the present invention has employed the following means.

A honeycomb filter according to an aspect of the present invention includes
two or more honeycomb segments, each of which includes a plurality of porous partition portions each forming a cell, the cell being open at one end and closed at the other end and serving as a flow path of a fluid, and a trapping layer for trapping and removing solid components contained in the fluid, the trapping layer being disposed on each of the partition portions; and
a bonding layer that is disposed between the two or more honeycomb segments and joins the outer surfaces of the two or more honeycomb segments together,
wherein the thickness of a trapping layer formed on each of outermost partitions of at least one honeycomb segment in a surface perpendicular to the flow path is 60% or less of the thickness of a trapping layer formed on each of partitions in an inner region.

In this honeycomb filter, two or more honeycomb segments are joined together with a bonding layer. In each of the honeycomb segments, a trapping layer for trapping and removing solid components in a fluid is disposed on each of porous partition portions each forming a cell, which is open at one end and closed at the other end and serves as a fluid flow path. The thickness of a trapping layer formed on each of outermost partitions of a honeycomb segment in a surface perpendicular to the flow path is 60% or less of the thickness of a trapping layer formed on each of partitions in an inner region. In general, in treatment to burn trapped solid components to recover the function of a filter (hereinafter also referred to as regeneration treatment), the temperature of a partition tends to increase with the amount of trapped solid components. When the thickness of a trapping layer formed on each of outermost partitions is 60% or less of the thickness of a trapping layer formed on each of partitions in an inner region, this results in decreased flow path resistance in the outermost partitions and an increased amount of solid components deposited thereon, as compared with a partition having a uniform trapping layer. Thus, in regeneration treatment, combustion of deposited solid components increases the temperature of the outermost partitions. In general, in regeneration treatment, a portion of a honeycomb segment closer to its center tends to have a higher temperature. This temperature difference tends to cause a thermal expansion difference between the honeycomb segment and a bonding layer formed around the honeycomb segment. On the other hand, in a honeycomb filter according to an aspect of the present invention, the outermost partitions having high temperatures can increase the temperature of the bonding layers through heat conduction and decrease the temperature difference between the honeycomb segment and the bonding layer, thus decreasing the thermal expansion difference.

The term "an outermost partition", as used herein, refers to a partition on an outer surface of an outermost cell in a honeycomb segment. The term "a partition in an inner region", as used herein, refers to a partition in a region that is disposed inside a honeycomb segment and has a width of half the width of the honeycomb segment. The term "the thickness of a trapping layer formed on each of outermost partitions", as used herein, refers to the average thickness of trapping layers formed on the inner surfaces (surfaces having no bonding layer) of the outermost partitions of a honeycomb segment. The term "the thickness of a trapping layer formed on each of partitions in an inner region", as used herein, refers to the average thickness of trapping layers formed on the partitions in an inner region. The outermost partitions and the partitions in the inner region of a honeycomb segment may have a uniform trapping layer, an inclination or a variation along the flow path, or a variation perpendicularly to the flow path, or may partially have no trapping layer.

In a honeycomb filter according to an aspect of the present invention, the thickness of the trapping layer formed on each of the partitions in the inner region may be 10 µm or more and 80 µm or less. When the thickness of the trapping layer is 10 µm or more, it is easy to trap PM. When the thickness of the trapping layer is 80 µm or less, this results in a further decrease in the permeation resistance of the partition and a further decrease in pressure loss. The thickness of the trapping layer formed on each of the partitions in the inner region is preferably 20 µm or more and 60 µm or less, more preferably 30 µm or more and 50 µm or less.

In a honeycomb filter according to an aspect of the present invention, the trapping layers may be formed by supplying an inorganic material that is a raw material for the trapping layers to the cells using a gas as a transport medium. Transportation using a gas can be utilized to relatively easily control the morphology, such as the thickness, of the trapping layer.

In a honeycomb filter according to an aspect of the present invention, the partition portions include a cell that is open at one end and closed at the other end and a cell that is closed at one end and open at the other end alternately disposed, and the trapping layer is formed on each of the partition portions in the cells into which the fluid flows. This allows solid components contained in the fluid to be efficiently removed with further decreased pressure loss. In this case, "the thickness of a trapping layer formed on each of outermost partitions" and "the thickness of a trapping layer formed on each of partitions in an inner region" refer to the thickness of a trapping layer formed on each of partition portions in the cells into which the fluid flows.

In a honeycomb filter according to an aspect of the present invention, at least one of the partition portion and the trapping layer may be loaded with a catalyst. The catalyst may be at least one of a catalyst for burning trapped PM and a catalyst for decomposing HC, CO, and NOₓ contained in an exhaust gas. The catalyst can improve the efficiency of PM combustion or efficiently decompose HC, CO, and NOₓ.

In a honeycomb filter according to an aspect of the present invention, the partition portions may contain one or more inorganic materials selected from cordierite, SiC, mullite, aluminum titanate, alumina, silicon nitride, SIALON, zirconium phosphate, zirconia, titania, and silica. The trapping layers may contain one or more inorganic materials selected from cordierite, SiC, mullite, aluminum titanate, alumina, silicon nitride, SIALON, zirconium phosphate, zirconia, titania, and silica. Preferably, the trapping layers are formed of the material of the partition portions.

### Brief Description of Drawings

Fig. 1 is a schematic explanatory view of an example of the structure of a honeycomb filter 20.
Fig. 2 is a schematic explanatory view of a section of a honeycomb segment 21.
Fig. 3 is an explanatory view of thermal expansion in regeneration treatment of the honeycomb filter 20.
Fig. 4 is an explanatory view of a method for calculating the thickness of a trapping layer on the basis of SEM observation.
Fig. 5 is an explanatory view of measuring points at which the thickness of a trapping layer is measured.

### Best Modes for Carrying Out the Invention

Embodiments of the present invention will be described below with reference to the accompanying drawings. For example, a honeycomb filter according to an aspect of the present invention is installed in an automobile gas exhaust pipe so as to purify an exhaust gas from an engine and traps and removes solid components (particulate matter, hereinafter also referred to as PM) contained in the exhaust gas. In this honeycomb filter, when the amount of trapped PM has reached a predetermined value, the fuel concentration is increased to burn the trapped PM (regeneration treatment). A honeycomb filter according to an aspect of the present invention is preferably used in applications in which the amount of PM contained in an exhaust gas varies because of output fluctuations or applications in which regeneration treatment is performed at relatively irregular intervals and requires engine stop during the regeneration treatment.

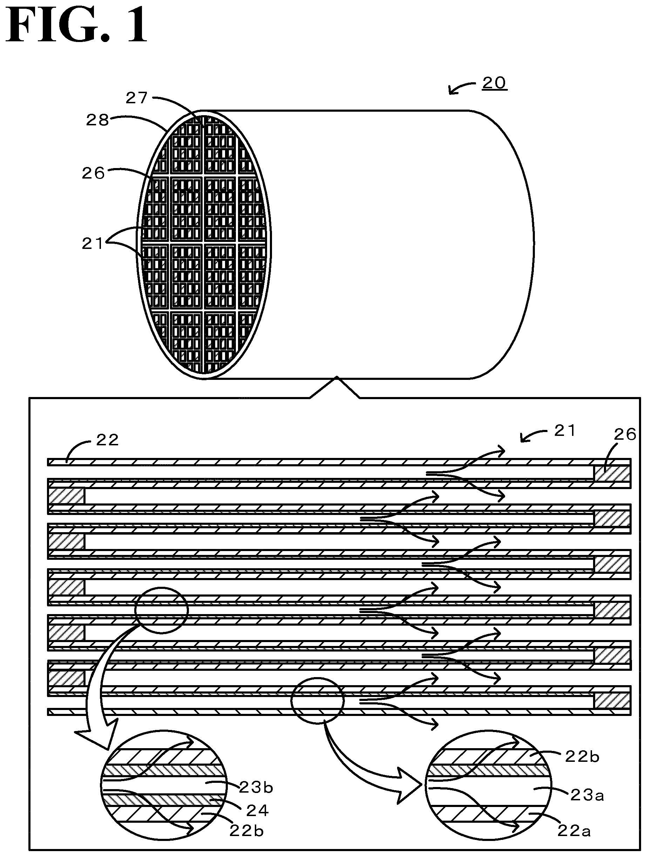

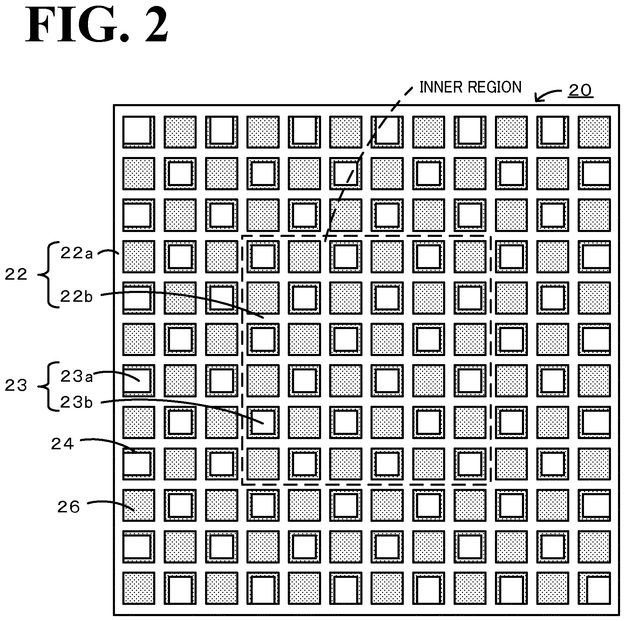

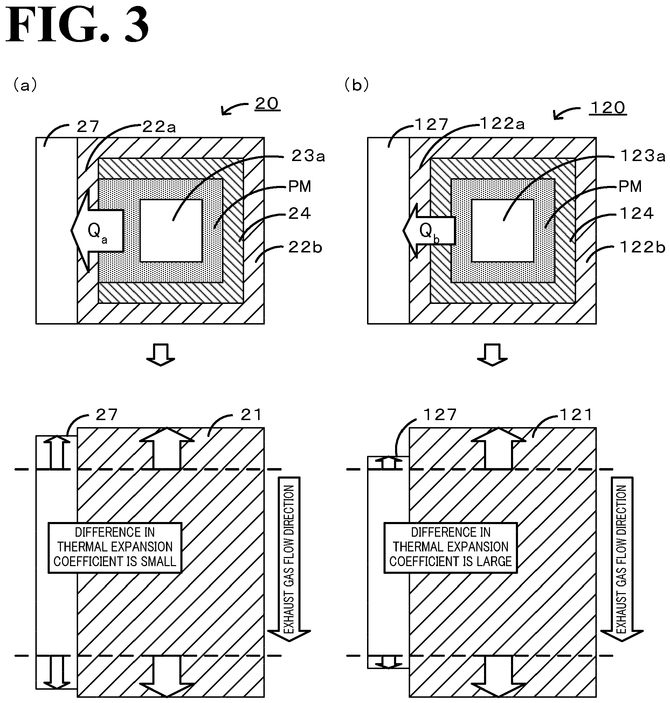

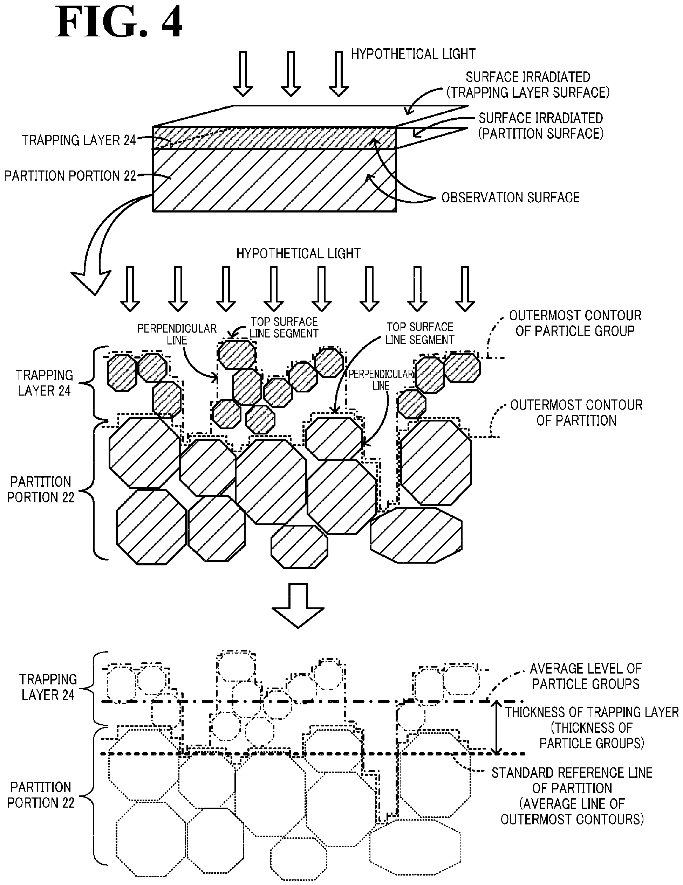

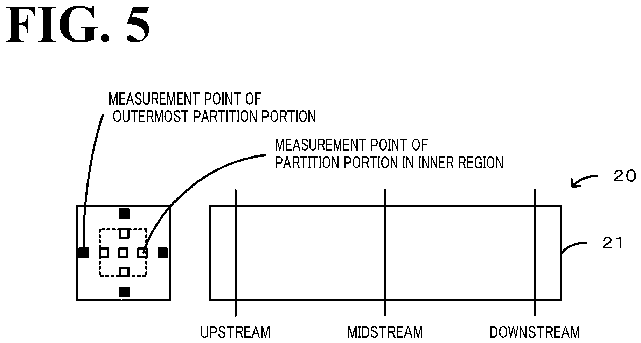

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is a schematic explanatory view of an example of the structure of a honeycomb segment 21. Fig. 3 is an explanatory view of thermal expansion in regeneration treatment of a honeycomb filter having no trapping layer on an outermost partition portion 22a (Fig. 3(a)) and a honeycomb filter having a trapping layer on an outermost partition portion 122a (Fig. 3(b)). Fig. 4 is an explanatory view of a method for calculating the thickness of a trapping layer on the basis of SEM observation. Fig. 5 is an explanatory view of measuring points at which the thickness of a trapping layer 24 is measured.

In the honeycomb filter 20 according to the present embodiment as illustrated in Fig. 1, the outer surfaces of two or more honeycomb segments 21 each including partition portions 22 are joined together with a bonding layer 27, and an outer protective portion 28 is disposed around the honeycomb segments 21. The honeycomb filter 20 includes porous partition portions 22 each forming a cell 23, the cell being open at one end and sealed with a sealing portion 26 at the other end and serving as an exhaust gas flow path, and a trapping layer 24 for trapping and removing solid components (PM) contained in a fluid (exhaust gas), the trapping layer being disposed on each of the partition portions 22. In the honeycomb filter 20, the partition portion 22 is formed such that a cell 23 that is open at one end and closed at the other end and a cell 23 that is closed at one end and open at the other end are alternately disposed. In the honeycomb filter 20, an exhaust gas enters a cell 23 having an opening on the inlet side (hereinafter also referred to as an inlet cell), passes through the trapping layer 24 and the partition portion 22, and is exhausted from another cell 23 having an opening on the outlet side (hereinafter also referred to as an outlet cell), during which PM in the exhaust gas is trapped on the trapping layer 24.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells 23 may be polygonal, such as triangular, tetragonal, hexagonal, or octagonal, circular, or streamlined, such as elliptical, or combination thereof. For example, the cells 23 may have a tetragonal cross section perpendicular to the exhaust gas flow direction. In the present embodiment, in principle, the honeycomb filter 20 is cylindrical, the honeycomb segments 21 are rectangular columnar, and the cells 23 are rectangular.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The porosity is measured by a mercury intrusion method. The partition portion 22 preferably has an average pore size of 10 µm or more and 60 µm or less. The average pore size is measured by a mercury intrusion method. The partition portion 22 preferably has a thickness of 150 µm or more and 600 µm or less, more preferably 200 µm or more and 400 µm or less. A thickness of 150 µm or more results in high mechanical strength, and a thickness of 600 µm or less results in low pressure loss. The partition portion 22 having such a porosity, an average pore size, and a thickness allows an exhaust gas to easily pass through the partition portion 22 and PM to be easily trapped and removed.

The trapping layer 24 for trapping and removing PM contained in an exhaust gas may be formed of particle groups having an average particle size smaller than the average pore size of the partition portion 22 and may be disposed on the partition portion 22. The trapping layer 24 preferably has an average pore size of 0.2 µm or more and 10 µm or less and a porosity of 40% by volume or more and 95% by volume or less. The average size of particles constituting the trapping layer is preferably 0.5 µm or more and 15 µm or less. An average pore size of 0.2 µm or more results in the prevention of an excessive initial pressure loss in the absence of PM deposition. An average pore size of 10 µm or less results in an improvement in trapping efficiency, the prevention of PM entering the pores of the partition portion 22 through the trapping layer 24, and the prevention of the reduction in the effect of decreasing pressure loss during PM deposition. A porosity of 40% by volume or more results in the prevention of an excessive initial pressure loss in the absence of PM deposition. A porosity of 95% by volume or less results in the formation of a surface layer serving as a durable trapping layer 24. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. Thus, it is possible to maintain high PM trapping efficiency, prevent a sudden increase in pressure loss immediately after the start of PM trapping, decrease pressure loss during PM deposition, and impart durability to the trapping layer. The trapping layer 24 may be formed on the partition portion 22 of each of the exhaust gas inlet and outlet cells. As illustrated in Fig. 1, preferably, the trapping layer 24 is formed on the partition portion 22 of each inlet cell and is not formed on the partition portion 22 of each outlet cell. This allows PM contained in a fluid to be efficiently removed with further decreased pressure loss. Furthermore, this facilitates the manufacture of the honeycomb filter 20. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite. Among these, aluminosilicate is more preferable. The average particle size of the particle groups constituting the trapping layer 24 is a mean value measured by observing the trapping layer 24 with a scanning electron microscope (SEM) and measuring the individual particles of the trapping layer 24 in an image obtained. The average particle size of raw material particles is the median size (D50) measured with a laser diffraction/scattering particle size distribution analyzer using water as a dispersion medium.

In the honeycomb segments 21 of the honeycomb filter 20 according to the present embodiment, the trapping layers 24 are formed such that the ratio A/B of the thickness A (µm) of the trapping layer 24 formed on each of outermost partition portions 22a to the thickness B (µm) of the trapping layer 24 formed on each of partition portions 22b in an inner region is 60% or less (see Figs. 1 to 3). Thus, the flow path resistance of the trapping layers 24 is much lower in the outermost partition portions 22a than in the partition portions 22b in the inner region. Thus, the outermost partition portions 22a allow more exhaust gas to pass through and trap more PM (see Fig. 3(a)). Regeneration treatment to burn trapped PM to recover the function of the filter increases the temperature of the outermost partition portions 22a. In regeneration treatment of a common honeycomb filter 120, a portion of a honeycomb segment closer to its center tends to have a higher temperature. This temperature difference tends to cause a thermal expansion difference between a honeycomb segment 121 and a bonding layer 127 (see Fig. 3(b)). In regeneration treatment of the honeycomb filter 20 having no trapping layer on each of the outermost partition portions 22a, a bonding layer 27 receives heat Qₐ (J), which is larger than heat Q_{b} (J) in Fig. 3(b), from the corresponding outermost partition portion 22a through heat conduction. This can decrease the temperature difference between the honeycomb segment 21 and the bonding layer 27 and further decreases the thermal expansion difference (see Fig. 3(a)). Thus, the honeycomb filter 20 according to the present embodiment can decrease the thermal expansion difference. For example, even abnormal heat generation in regeneration treatment does not significantly increase a thermal expansion difference between the honeycomb segment 21 and the bonding layer 27. This can prevent a decrease in the bonding strength and separation between the honeycomb segment 21 and the bonding layer 27. The thickness B of the trapping layer formed on each of the partition portions 22b in the inner region is preferably 10 µm or more and 80 µm or less, more preferably 20 µm or more and 60 µm or less, still more preferably 30 µm or more and 50 µm or less. When the thickness of the trapping layer is 10 µm or more, it is easy to trap PM. When the thickness of the trapping layer is 80 µm or less, this results in a further decrease in the permeation resistance of the partition and a further decrease in pressure loss. The outermost partition portion 22a refers to a partition constituting an outer surface of an outermost cell 23a in the honeycomb segment 21. The partition portion 22b in the inner region refers to a partition of a cell 23b in the inner region that is disposed inside a honeycomb segment 21 and has an outer diameter of not more than half the outer diameter of the outermost partition. Since the honeycomb segment 21 has a square cross section, the cell 23b in the inner region refers to a cell in a square having the axis of the honeycomb segment 21 as its center and a length of half the length of the honeycomb segment 21 without rotation. The thickness A (µm) of the trapping layer 24 on each of the outermost partition portions 22a is the average thickness of the trapping layers 24 formed on the inner surfaces (surfaces having no bonding layer 27) of the outermost partition portions 22a. The thickness B (µm) of the trapping layer 24 on each of the partition portions 22b in the inner region is the average thickness of the trapping layers 24 formed on the exhaust gas (fluid) inlet side of the partition portions 22b in the inner region. The outermost partition portions 22a and the partition portions 22b in the inner region may have a uniform trapping layer 24 or an inclination or a variation along the flow path or perpendicularly to the flow path, or may partially have no trapping layer. The outermost partition portions 22a may have no trapping layer. In Figs. 1 and 2, the trapping layer 24 is not formed on the outermost partition portions 22a but is uniformly formed on the partition portions 22b in the inner region.

A method for forming the trapping layer 24 may involve supplying a gas containing the raw material for the trapping layer to an inlet cell using a gas (air) as a transport medium for the raw material for the trapping layer. This is preferred because the particle groups constituting the trapping layer become coarse and can form a trapping layer having a very high porosity. The raw material for the trapping layer may be inorganic fiber or inorganic particles. The inorganic fiber may be that described above and preferably has an average size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. The raw material for the trapping layer preferably has an average particle size smaller than the average pore size of the partition portion 22. In this case, the inorganic material of the partition portion 22 is preferably the same as the inorganic material of the trapping layer 24. A gas containing inorganic particles is preferably introduced by suction on the gas outlet side. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the particles constituting the partition portion with silica. In the case of an oxide material, such as cordierite or aluminum titanate, particles and particles and partition portions are preferably bound by sintering. The trapping layer 24 may be formed on the cell 23 using a slurry containing inorganic particles serving as the raw material of the trapping layer 24. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles.

A method for making the thickness of the trapping layer formed on each of the outermost partitions 22a smaller than the thickness of the trapping layer formed on each of the partition portions 22b in the inner region will be described below. For example, a trapping layer may be formed only on the partition portions 22b in the inner region by utilizing a chucking jig for forming a trapping layer in a honeycomb segment to close the inlets of the outermost cells 23a, while no trapping layer may be formed on the outermost partition portions 22a. Alternatively, the inlets of the outermost cells 23a are sealed with a sealant (such as a sealing tape) in advance to form a trapping layer only on the partition portions 22b in the inner region, while no trapping layer is formed on the outermost partition portions 22a. When the raw materials for the trapping layer are prevented from entering the outermost cells 23a in advance, a trapping layer can be easily formed on the partition portions 22b in the inner region while no trapping layer is formed on the outermost partition portions 22a. When the trapping layers 24 are formed using a gas as a transport medium for the raw materials of the trapping layer, the outer side surface of the honeycomb segment 21 may be treated to have high permeation resistance. More specifically, a sealant (such as a sealing tape) may be attached to the outer side surface of the honeycomb segment 21, or a resin component may be applied to the outer side surface of the honeycomb segment 21. A method for attaching a sealant is preferred because the sealant can be removed before firing to prevent the sealant components from remaining on the honeycomb filter. A method for applying a resin component is preferred because it is easy to control permeation resistance by controlling the coating weight. In the application of a resin component, the resin component is preferably a resin component that is easy to apply, such as an epoxy resin. The resin component is preferably removed by subsequent heating (for example, heat treatment at 1200°C or more and 1500°C or less to bind SiC particles of a trapping layer together or to a partition). The resin may be applied with a roller or by spraying or dipping. An epoxy resin is preferably applied with a roller in combination with a curing agent. In this case, the permeation resistance can be controlled by adjusting the amount of epoxy resin impregnated in the outer side surface of the honeycomb segment 21 by the addition of an organic solvent, such as ethanol, to the epoxy resin.

A method for measuring the thickness of the trapping layer 24 will be described below with reference to Fig. 4. The thickness of the trapping layer 24, in other words, the thickness of the particle groups constituting the trapping layer is determined in the following manner. The thickness of the trapping layer is determined by embedding a partition substrate of the honeycomb filter 20 in a resin and polishing the resin to prepare a sample for observation, observing the sample with a scanning electron microscope (SEM), and analyzing an image obtained. First, the sample for observation is prepared by cutting and polishing such that a cross section perpendicular to the fluid flow direction serves as an observation surface. The observation surface of the sample for observation prepared is photographed at measuring points described below in a visual field of approximately 500 µm x 500 µm at a SEM magnification in the range of 100 to 500. The outermost contour of a partition is then hypothetically drawn on an image obtained. The outermost contour of a partition is a line showing the outline of the partition and refers to a projector obtained by irradiating a partition surface (a surface to be irradiated; see the top in Fig. 4) with hypothetical parallel light in the direction perpendicular to the partition surface (see the middle in Fig. 4). The outermost contour of a partition is composed of line segments corresponding to a plurality of top surfaces of the partition at different levels irradiated with hypothetical light and perpendicular lines each connecting line segments corresponding to adjacent top surfaces of the partition at different levels. The line segments corresponding to the top surfaces of the partition are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of a partition, the presence of a trapping layer is disregarded. Subsequently, in the same manner as in the outermost contour of a partition, the outermost contour of the particle groups constituting a trapping layer is hypothetically drawn. The outermost contour of the particle groups is a line showing the outline of the trapping layer and refers to a projector obtained by irradiating a trapping layer surface (a surface to be irradiated; see the top in Fig. 4) with hypothetical parallel light in the direction perpendicular to the trapping layer surface (see the middle in Fig. 4). The outermost contour of the particle groups is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the partition. For a porous trapping layer, in a sample for observation prepared by embedding in a resin and polishing, some particle groups are observed as if they floated in the air. The outermost contour is therefore drawn with the projector obtained by hypothetical light irradiation. Subsequently, the standard reference line of the partition is determined on the basis of the levels and lengths of the line segments of the outermost contour corresponding to the top surfaces of the partition thus drawn. The standard reference line is the average line of the outermost contour of the partition (see the bottom in Fig. 4). In the same manner as in the standard reference line of the partition, the average level of the particle groups is determined on the basis of the levels and lengths of the line segments of the outermost contour corresponding to the top surfaces of the particle groups thus drawn. The average level of the particle groups is the average line of the outermost contour of the particle groups (see the bottom in Fig. 4). The difference (length) between the average level of the particle groups and the standard reference line of the partition is considered to be the thickness of the trapping layer (the thickness of the particle groups) in the image. In this manner, the thickness of a trapping layer can be determined.

Points for measuring the thickness of the trapping layer will be described below with reference to Fig. 5. The thickness A (µm) of the trapping layer formed on each of the outermost partition portions 22a in the honeycomb segment 21 of the honeycomb filter 20 is divided into upstream, midstream, and downstream portions in the flow path direction of the honeycomb segment 21. In the upstream, the honeycomb segment 21 is sectioned at 10% of the total length of the honeycomb segment 21 from the upstream end face. In the midstream, the honeycomb segment 21 is sectioned at 50% of the total length of the honeycomb segment 21 from the upstream end face. In the downstream, the honeycomb segment 21 is sectioned at 10% of the total length of the honeycomb segment 21 from the downstream end face. For each of the cross sections, the thickness is measured at four midpoints of the sides of a square composed of the outermost partition portions 22a. The average thickness is calculated from the twelve measurements. The thickness B (µm) of the trapping layer formed on each of the partition portions 22b in the inner region is measured in upstream, midstream, and downstream cross sections in the flow path direction of the honeycomb segment 21. For each of the cross sections, the thicknesses at five points including the center of the honeycomb segment 21 and four midpoints of line segments between the center of the honeycomb segment 21 and the points for measuring the thickness of the trapping layer formed on each of the outermost partition portions 22a. The average thickness is calculated from the fifteen measurements. The thickness A (µm) of the trapping layer formed on each of the outermost partition portions 22a and the thickness B (µm) of the trapping layer formed on each of the partition portions 22b in the inner region in the honeycomb segment 21 can be determined in this manner.

The average pore size and the porosity of the trapping layer 24 are determined by image analysis based on SEM observation. In the same manner as in the thickness of the trapping layer, as illustrated in Fig. 4, images of a cross section of the honeycomb filter 20 are obtained with SEM. A region between the outermost contour of a partition and the outermost contour of particle groups is considered to be a region occupied by a trapping layer (a trapping layer region). In the trapping layer region, a region including the particle groups is referred to as a "particle group region", and a region including no particle group is referred to as a "pore region of the trapping layer". The area of the trapping layer region (trapping layer area) and the area of the particle group region (particle group area) are determined. The porosity of the trapping layer is calculated by dividing the particle group area by the trapping layer area and multiplying the quotient by 100. In the "pore region of the trapping layer", an incircle inscribed in the outermost contours of the particle groups and the partition and the periphery of the particle groups is drawn such that the diameter of the incircle is as large as possible. In the case that a plurality of incircles can be drawn in one "pore region of the trapping layer", for example, in the case of a rectangular pore region having a large aspect ratio, a plurality of incircles as large as possible are drawn such that the pore region is sufficiently filled with the incircles. In the image observation area, the average diameter of the incircles is considered to be the average pore size of the trapping layer. In this manner, the average pore size and the porosity of the trapping layer 24 can be determined.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may be that described above and preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The average particle size is the median size (D50) measured with a laser diffraction/scattering particle size distribution analyzer using water as a dispersion medium. The porosity of the bonding layer 27 is preferably 10% by volume or more and 85% by volume or less, more preferably 20% by volume or more and 65% by volume or less. The porosity is measured by any one of a mercury intrusion method, Archimedes' principle, and an image analysis method. The bonding layer 27 preferably has an average pore size of 10 µm or more and 600 µm or less. The average pore size is measured by a mercury intrusion method or an image analysis method. The outer protective portion 28 is a layer for protecting the periphery of the honeycomb filter 20 and may contain the inorganic particles, the inorganic fiber, and the binding material described above.

In the honeycomb filter 20, the thermal expansion coefficients of the honeycomb segment 21 and the bonding layer 27 at a temperature in the range of 40°C to 800°C in the longitudinal direction of the cells 23 are preferably 6.0 x 10⁻⁶/°C or less, more preferably 1.0 x 10⁻⁶/°C or less, still more preferably 0.8 x 10⁻⁶/°C or less. At a thermal expansion coefficient of 6.0 x 10⁻⁶/°C or less, thermal stress generated by exposure to a high-temperature exhaust gas can be within tolerance. The difference in thermal expansion coefficient between the honeycomb segment 21 and the bonding layer 27 is preferably 0.01 x 10⁻⁶/°C or more and 3 x 10⁻⁶°C or less, more preferably 0.05 x 10⁻⁶/°C or more and 2 x 10⁻⁶/°C or less. When the difference in thermal expansion coefficient is 0.01 x 10⁻⁶/°C or more, abnormal heat generation may cause a crack or separation between the honeycomb segment 21 and the bonding layer 27 because of the thermal expansion difference, and therefore the present invention possesses great significance. When the difference in thermal expansion coefficient is 3 x 10⁻⁶/°C or less, the thermal expansion difference between the honeycomb segment 21 and the bonding layer 27 is probably not excessively large.

In the honeycomb filter 20, the partition portion 22 or the trapping layer 24 may contain a catalyst. The catalyst may be at least one of a catalyst for promoting the combustion of trapped PM, a catalyst for oxidizing unburned gases (HCs, CO, and the like) contained in an exhaust gas, and a catalyst for occluding/adsorbing/decomposing NOₓ. The catalyst can increase the efficiency of burning PM, oxidizing unburned gases, or decomposing NOₓ. The catalyst more preferably contains at least one of noble metal elements and transition metal elements. The honeycomb filter 20 may be loaded with another catalyst or a purification material. Among those are a NOₓ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOₓ can more highly purify an exhaust gas.

In accordance with the honeycomb filters of the embodiments described above, the thickness of the trapping layer formed on each of the outermost partitions is 60% or less of the thickness of the trapping layer formed on each of the partitions in the inner region, a large amount of PM deposited on the outermost partitions can increase the temperature of the bonding layers in regeneration treatment, and this can decrease the thermal expansion difference between the honeycomb segment and the bonding layer.

The present invention is not limited to the embodiments described above and can be implemented in various aspects within the scope of the present invention.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 traps PM contained in an exhaust gas in the present embodiment, any honeycomb filter that traps and removes solid components in a fluid may be envisaged. Such a honeycomb filter may be a honeycomb filter for an engine of construction equipment or a honeycomb filter for a factory or a power plant.

### EXAMPLES

Specific examples of the manufacture of a honeycomb filter will be described below.

### Manufacture of Honeycomb Filter

A SiC powder and a metallic Si powder were mixed at a mass ratio of 80:20. The mixture was kneaded with methylcellulose, hydroxypropoxylmethylcellulose, a surfactant, and water to prepare a plastic pug. The pug was extruded through a die to form a honeycomb segment formed product having a desired shape. The thickness of the partition portion was 305 µm, the cross section was 35 mm x 35 mm, and the length was 152.4 mm. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that a cell that was open at one end and closed at the other end and a cell that was closed at one end and open at the other end were alternately disposed. Air containing SiC particles having an average particle size smaller than the average pore size of the partition was introduced from open ends of the honeycomb segment fired product on the exhaust gas inlet side while drawn in by suction from the outlet side of the honeycomb segments. The SiC particles were deposited on the surface layer of the partition on the exhaust gas inlet side. An epoxy resin (trade name "SpeciFix epoxy resin" (manufactured by Struers A/S.)) and a curing agent (trade name "SpeciFix 20 curing agent" (manufactured by Struers A/S.)) were applied to the segment side surfaces with a roller to increase the permeation resistance of the outermost partitions of the segment, thus decreasing the number of particles for forming the trapping layers deposited on the outermost partitions in the formation of the trapping layers. More specifically, an organic solvent (ethanol) was added to the epoxy resin to control the amount of epoxy resin impregnated in the partitions and the permeation resistance such that the ratio A/B of the thickness A (µm) of the trapping layer formed on each of the outermost partitions of the segment to the thickness B (µm) of the trapping layer formed on each of the partitions in the inner region was a predetermined value. Heat treatment in the atmosphere at 1300°C for two hours was performed to join the SiC particles deposited on the surface layer of the partition together and the deposited SiC particles and SiC and Si particles constituting the partition together. Thus, honeycomb segments were formed in which the trapping layer was formed on the partition portion. A binder slurry prepared by kneading alumina silicate fiber, colloidal silica, polyvinyl alcohol, silicon carbide, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure. The honeycomb filter had a cross section diameter of 144 mm and a length of 152 mm. In Examples 1 to 7 and Comparative Examples 1 to 6 described below, the porosity of the partition portion was 40% by volume, the average pore size was 15 µm, and the average size of particles forming the trapping layer was 2.0 µm. As shown in Table 1, a honeycomb filter having a cell pitch of 1.47 mm and a bonding agent porosity of 30% (sample 1), a honeycomb filter having a cell pitch of 1.80 mm and a bonding agent porosity of 50% (sample 2), and a honeycomb filter having a cell pitch of 2.01 mm and a bonding agent porosity of 70% (sample 3) were fabricated. The porosity and the average pore size of the partition portion and the bonding member were measured with a mercury porosimeter (Auto Pore III 9405 manufactured by Micromeritics). The average particle size of the raw material particles of the trapping layer is the median size (D50) measured with a laser diffraction/scattering particle size distribution analyzer (LA-910 manufactured by Horiba, Ltd.) using water as a dispersion medium.

**Table 1**

| | CELL PITCH mm | BONDING AGENT POROSITY % |
|---|---|---|
| SAMPLE 1 | 1.47 | 30 |
| SAMPLE 2 | 1.80 | 50 |
| SAMPLE 3 | 2.01 | 70 |

### Catalyst Loading

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of a honeycomb filter fabricated as described above was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of honeycomb filter was 30 g/L.

### EXAMPLES 1 TO 3

A honeycomb filter according to Example 1 was fabricated using the process for manufacturing a honeycomb filter described above, wherein the trapping layer was formed such that B = 50 µm and A/B = 0%. In a honeycomb filter according to Example 2, the trapping layer was formed such that B = 50 µm and A/B = 30%. In a honeycomb filter according to Example 3, the trapping layer was formed such that B = 50 µm and A/B = 60%.

### COMPARATIVE EXAMPLES 1 AND 2

A honeycomb filter according to Comparative Example 1 was fabricated using the process for manufacturing a honeycomb filter described above, wherein the trapping layer was formed such that B = 50 µm and A/B = 70%. In a honeycomb filter according to Comparative Example 2, the trapping layer was formed such that B = 50 µm and A/B = 100%.

### EXAMPLES 4 AND 5

A honeycomb filter according to Example 4 was fabricated using the process for manufacturing a honeycomb filter described above, wherein the trapping layer was formed such that B = 70 µm and A/B = 0%. In a honeycomb filter according to Example 5, the trapping layer was formed such that B = 70 µm and A/B = 60%.

### COMPARATIVE EXAMPLES 3 AND 4

A honeycomb filter according to Comparative Example 3 was fabricated using the process for manufacturing a honeycomb filter described above, wherein the trapping layer was formed such that B = 70 µm and A/B = 70%. In a honeycomb filter according to Comparative Example 4, the trapping layer was formed such that B = 70 µm and A/B = 100%.

### EXAMPLES 6 AND 7

A honeycomb filter according to Example 6 was fabricated using the process for manufacturing a honeycomb filter described above, wherein the trapping layer was formed such that B = 30 µm and A/B = 0%. In a honeycomb filter according to Example 7, the trapping layer was formed such that B = 30 µm and A/B = 60%.

### COMPARATIVE EXAMPLES 5 AND 6

A honeycomb filter according to Comparative Example 5 was fabricated using the process for manufacturing a honeycomb filter described above, wherein the trapping layer was formed such that B = 30 µm and A/B = 70%. In a honeycomb filter according to Comparative Example 6, the trapping layer was formed such that B = 30 µm and A/B = 100%.

### Measurement of Thickness of Trapping Layer

SEM images of cross sections of Examples 1 to 7 and Comparative Examples 1 to 6 were obtained with a scanning electron microscope (S-3200N manufactured by Hitachi High-Technologies Corp.) to measure the thickness A of the trapping layer formed on each of the outermost partition portions and the thickness B of the trapping layer formed on each of the partition portions in the inner region. The thickness of particle groups constituting the trapping layer was determined by embedding a partition substrate of the honeycomb segment in a resin, cutting and polishing the resin to prepare a sample for observation in which a cross section perpendicular to the fluid flow direction became an observation surface, observing the sample with a scanning electron microscope (SEM), and analyzing an image obtained. The points for measuring the thickness A of the trapping layer formed on each of the outermost partition portions were four midpoints of the sides of a square composed of the outermost partition portions in a cross section disposed at 15 mm from the upstream end face, a cross section disposed at the center, and a cross section disposed at 15 mm from the downstream end face of the honeycomb segment (12 points in total) (see Fig. 5). The points for measuring the thickness B of the trapping layer formed on each of the partition portions in the inner region were the center of the honeycomb filter and four midpoints of line segments between the center of the honeycomb segment and the points for measuring the thickness of the trapping layer formed on each of the outermost partition portions in a cross section disposed at 15 mm from the upstream end face, a cross section disposed at the center, and a cross section disposed at 15 mm from the downstream end face of the honeycomb segment (15 points in total) (see Fig. 5). The outermost contour of the partition was then hypothetically drawn on the image obtained. The outermost contour of the partition refers to a projector obtained by irradiating a partition surface with hypothetical parallel light in the direction perpendicular to the partition surface. Likewise, the outermost contour of the particle groups constituting the trapping layer was hypothetically drawn. The outermost contour of the particle groups refers to a projector obtained by irradiating a surface of the particle groups with hypothetical parallel light in the direction perpendicular to the trapping layer surface. Subsequently, the standard reference line of the partition was determined on the basis of the levels and lengths of the line segments of the outermost contour corresponding to the top surfaces of the partition thus drawn. The standard reference line was the average line of the outermost contour of the partition. In the same manner as in the standard reference line of the partition, the average level of the particle groups was determined on the basis of the levels and lengths of the line segments of the outermost contour corresponding to the top surfaces of the particle groups thus drawn. The average level of the particle groups was the average line of the outermost contour of the particle groups. The difference (length) between the average level of the particle groups and the standard reference line of the partition was considered to be the thickness of the trapping layer (the thickness of the particle groups) in the image. The thicknesses of the trapping layer were averaged to determine the thickness A of the trapping layer formed on each of the outermost partition portions and the thickness B of the trapping layer formed on each of the partition portions in the inner region.

### PM Deposition

A honeycomb filter thus fabricated was installed in a 2.0-L diesel engine, and PM was deposited in a steady state at an engine speed of 2500 rpm and a torque of 60 Nm. The deposition time was adjusted such that the amount of PM deposition on the partition portions in the inner region was 20, 30, or 40 g/L. The amount of PM deposit was calculated by subtracting the weight of the honeycomb filter before the engine test from the weight of the honeycomb filter after the engine test. The amount of PM deposition described above simulates additional deposition, which is larger than the regeneration threshold value in ordinary use.

### Forced Regeneration Evaluation

After PM was deposited as described above, the inlet gas temperature of the honeycomb filter was increased to 680°C by post-injection. PM deposited on the honeycomb filter began to burn. When the pressure loss of the honeycomb filter began to decrease, post-injection was stopped, and simultaneously the engine was idled. At that time a high oxygen content and a low flow rate cause abnormal combustion of residual PM within the honeycomb filter, rapidly increasing the internal temperature of the honeycomb filter. In this case, also in the honeycomb segment, the midsection burns most rapidly. Thus, a temperature difference between the midsection of the segment and the vicinity of the joint causes a thermal expansion difference. The thermal expansion difference causes a stress between the segment and the bonding layer, possibly causing detachment of the segment. In the present example, forced regeneration was evaluated by visual inspection of the segment for detachment under abnormal conditions involving additional PM deposition and simultaneous abnormal combustion during forced regeneration.

### Experimental Results

Table 2 shows the measurements for Examples 1 to 7 and Comparative Examples 1 to 6. These measurements are mean values of the three samples listed in Table 1. When the amount of PM deposition was 20 or 30 g/L, Examples 1 to 7 and Comparative Examples 1 to 6 had no detachment of the segment. This shows that the segment was not detached unless the amount of PM deposition was in large excess. When the amount of PM deposition was 40 g/L, Examples 1 to 7 having an A/B ratio of 60% or less had no detachment of the segment. These results show that the formation of the trapping layer at an A/B ratio of 60% or less can decrease the thermal expansion difference between the segment and the bonding layer and prevent the detachment of the segment even when the amount of PM deposition is in excess. All the three samples listed in Table 1 had such a tendency. Although all the segments had a predetermined A/B in these examples and comparative examples, it is surmised that even when part of the segments do not satisfy this requirement the segments are rarely detached on the whole, and the same advantages can be achieved.

**Table 2**

| | B ¹⁾ | A/B ²⁾ | FORCED REGENERATION EVALUATION ³⁾ | | |
|---|---|---|---|---|---|
| | *µ*m | % | PM DEPOSITION AMOUNT 20g/L | PM DEPOSITION AMOUNT 30g/L | PM DEPOSITION AMOUNT 40e/L |
| EXAMPLE 1 | 49 | 1 | ○ | ○ | ○ |
| EXAMPLE 2 | 46 | 32 | ○ | ○ | ○ |
| EXAMPLE 3 | 51 | 56 | ○ | ○ | ○ |
| COMPARATIVE EXAMPLE 1 | 52 | 71 | ○ | ○ | × |
| COMPARATIVE EXAMPLE 2 | 48 | 100 | ○ | ○ | × |
| EXAMPLE 4 | 70 | 1 | ○ | ○ | ○ |
| EXAMPLE 5 | 71 | 59 | ○ | ○ | ○ |
| COMPARATIVE EXAMPLE 3 | 73 | 73 | ○ | ○ | × |
| COMPARATIVE EXAMPLE 4 | 69 | 99 | ○ | ○ | × |
| EXAMPLE 6 | 32 | 0 | ○ | ○ | ○ |
| EXAMPLE 7 | 29 | 58 | ○ | ○ | ○ |
| COMPARATIVE EXAMPLE 5 | 30 | 71 | ○ | ○ | × |
| COMPARATIVE EXAMPLE 6 | 30 | 100 | ○ | ○ | × |

| | | | | | |
|---|---|---|---|---|---|
| 1), 2) A : MEASURED AVERAGE THICKNESS OF TRAPPING LAYERS FORMED ON OUTERMOST PARTITIONS (*µ*m) B : MEASURED AVERAGE THICKNESS OF TRAPPING LAYERS FORMED PARTITIONS IN INNER REGION (*µ*m) 3) ○: SEGMENT DETACHMENT IS NOT PRESENT, × : SEGMENT DETACHMENT IS PRESENT | | | | | |

The present application claims the benefit of the priority to Japanese Patent Application 2010-81898 filed on March 31, 2010.

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20), comprising:
two or more honeycomb segments (21), each of which includes a plurality of porous partition portions (22) each forming a cell (23), the cell (23) being open at one end and closed at the other end and serving as a flow path of a fluid, and a trapping layer (24) for trapping and removing solid components contained in the fluid, the trapping layer (24) being disposed on each of the partition portions (22); and
a bonding layer (27) that is disposed between the two or more honeycomb segments (21) and joins the outer surfaces of the two or more honeycomb segments (21) together,
wherein, in a cross section perpendicular to the flow path, the thickness of the trapping layer (24) formed on each of outermost partitions (22a) of at least one honeycomb segment (21) is 60% or less of the thickness of the trapping layer (24) formed on each of partitions (22b) in an inner region, wherein the inner region is defined as a region inside the honeycomb segment (21) having a width of half the width of the honeycomb segment (21).

2. The honeycomb filter (20) according to Claim 1, wherein the trapping layer (24) formed on each of the partitions (22b) in the inner region has a thickness of 10 µm or more and 80 µm or less.

3. The honeycomb filter (20) according to Claim 1 or 2, wherein the partition portions (22) or the trapping layers (24) or both are loaded with a catalyst.

4. The honeycomb filter (20) according to any one of Claims 1 to 3, wherein the partition portions (22) contain one or more inorganic materials selected from cordierite, SiC, mullite, aluminium titanate, alumina, silicon nitride, SIALON, zirconium phosphate, zirconia, titania, and silica.

## Patentansprüche

1. Wabenfilter (20), umfassend:
zwei oder mehr Wabensegmente (21), von denen jedes eine Vielzahl von porösen Trennabschnitten (22) umfasst, die jeweils eine Zelle (23) bilden, wobei die Zelle (23) an einem Ende offen und an dem anderen Ende geschlossen ist und als Strömungsweg eines Fluids dient, und eine Einfangschicht (24) zum Einfangen und Entfernen von in dem Fluid enthaltenen festen Komponenten, wobei die Einfangschicht (24) an jedem der Trennabschnitte (22) angeordnet ist; und
eine Verbindungsschicht (27), die zwischen den zwei oder mehr Wabensegmenten (21) angeordnet ist und die Außenflächen der zwei oder mehr Wabensegmente (21) miteinander verbindet,
wobei die Dicke der Einfangschicht (24), die auf jeder der äußersten Trennwände (22a) zumindest eines Wabensegments (21) ausgebildet ist, in einem Querschnitt senkrecht zum Strömungsweg 60 % oder weniger der Dicke der Einfangschicht (24) beträgt, die auf jeder der Trennwände (22b) in einem inneren Bereich ausgebildet ist, wobei der innere Bereich als ein Bereich innerhalb des Wabensegments (21) mit einer Breite der halben Breite des Wabensegments (21) definiert ist.

2. Wabenfilter (20) nach Anspruch 1, wobei die auf jeder der Trennwände (22b) in dem inneren Bereich gebildete Einfangschicht (24) eine Dicke von 10 µm oder mehr und 80 µm oder weniger aufweist.

3. Wabenfilter (20) nach Anspruch 1 oder 2, wobei die Trennabschnitte (22) oder die Einfangschichten (24) oder beide mit einem Katalysator beladen sind.

4. Wabenfilter (20) nach einem der Ansprüche 1 bis 3, wobei die Trennabschnitte (22) ein oder mehrere anorganische Materialien enthalten, ausgewählt aus Cordierit, SiC, Mullit, Aluminiumtitanat, Aluminiumoxid, Siliciumnitrid, SIALON, Zirkoniumphosphat, Zirkoniumoxid, Titandioxid und Siliciumdioxid.

## Revendications

1. Filtre en nid d'abeilles (20), comprenant :
deux segments en nid d'abeilles (21) ou plus, dont chacun comprend une pluralité de parties de séparation poreuses (22) formant chacune une cellule (23), la cellule (23) étant ouverte à une première extrémité et fermée à l'autre extrémité et servant de trajet d'écoulement d'un fluide, et une couche de piégeage (24) pour piéger et éliminer des composants solides contenus dans le fluide, la couche de piégeage (24) étant disposée sur chacune des parties de séparation (22) ; et
une couche de liaison (27) qui est disposée entre les deux segments en nid d'abeilles (21) ou plus et joint les surfaces externes des deux segments en nid d'abeilles (21) ou plus ensemble,
dans lequel, dans une section transversale perpendiculaire au trajet d'écoulement, l'épaisseur de la couche de piégeage (24) formée sur chacune de séparations les plus externe (22a) d'au moins un segment en nid d'abeilles (21) est 60 % ou moins de l'épaisseur de la couche de piégeage (24) formée sur chacune des séparations (22b) dans une région interne , la région interne étant définie comme une région interne au segment en nid d'abeilles (21) ayant une largeur de la moitié de la largeur du segment en nid d'abeilles (21).

2. Filtre en nid d'abeilles (20) selon la revendication 1, dans lequel la couche de piégeage (24) formée sur chacune des séparations (22b) dans la région interne a une épaisseur de 10 µm ou plus et de 80 µm ou moins.

3. Filtre en nid d'abeilles (20) selon la revendication 1 ou 2, dans lequel les parties de séparation (22) ou les couches de piégeage (24) ou les deux sont chargées avec un catalyseur.

4. Filtre en nid d'abeilles (20) selon l'une quelconque des revendications 1 à 3, dans lequel les parties de séparation (22) contiennent un ou plusieurs matériaux inorganiques choisis parmi la cordiérite, le SiC, la mullite, le titanate d'aluminium, l'alumine, le nitrure de silicium, le SIALON, le phosphate de zirconium, la zircone, l'oxyde de titane et la silice.
